# FASCICULE DE BREVET EUROPEEN

(11) **EP 3 989 494 B1**
(45) Date de publication et mention de la délivrance du brevet: **04.12.2024**
(21) Numéro de dépôt: 20306252.6
(22) Date de dépôt: 21.10.2020
(51) Int. Cl.: H04L 45/24, H04L 47/24, H04L 47/62

(54) **PROCÉDÉ D'AGRÉGATION ET DE RÉGULATION DE MESSAGES VIA UN CANAL DE COMMUNICATION BIDIRECTIONNEL CONTRAINT**
VERFAHREN ZUR AGGREGATION UND STEUERUNG VON NACHRICHTEN ÜBER EINEN EINGESCHRÄNKTEN BIDIREKTIONALEN KOMMUNIKATIONSKANAL
METHOD FOR AGGREGATION AND CONTROL OF MESSAGES VIA A RESTRICTED BI-DIRECTIONAL COMMUNICATION CHANNEL

(43) Date de publication de la demande: 27.04.2022
(73) Titulaire: AVANTIX, 13794 Aix-en-Provence cedex 3 (FR)
(72) Inventeur: KELLER, Christophe, 13008 Marseille (FR); RICHARD, Patricia, 13090 Aix en Provence (FR)
(74) Mandataire: Cabinet Camus Lebkiri

(56) Documents cités:
- WO-A1-2017/119950

## Description

### DOMAINE TECHNIQUE DE L'INVENTION

Le domaine technique de l'invention est celui des télécommunications et plus particulièrement celui des communications via des canaux bidirectionnels contraints.

La présente invention concerne un procédé d'agrégation et de régulation de messages via un canal de communication bidirectionnel contraint.

### ARRIERE-PLAN TECHNOLOGIQUE DE L'INVENTION

Les réseaux de communications sécurisés de l'état de la technique ont des contraintes dont sont affranchis les réseaux de communication dits « classiques ». De tels réseaux de communication sécurisés utilisent des canaux de communication à débit limité.

Dans les communications multipoints passant par des passerelles vers ces réseaux sécurisés ou entre ces réseaux sécurisés, les canaux de communication sont très sollicités et limités en débit. Ainsi, au niveau d'un canal de communication entre deux noeuds d'un ou de deux réseaux sécurisés, des phénomènes de goulet d'étranglement apparaissent : les paquets provenant de plusieurs points doivent passer par ce canal de communication à débit limité pour atteindre leurs points de destination, provoquant une augmentation de la latence des échanges au sein du ou des réseaux, et potentiellement des pertes de paquets. En outre, il est nécessaire de gérer la priorité de ces paquets, certains paquets ayant une latence minimale à respecter pour atteindre leur destinataire due à l'importance des données qu'ils comprennent.

Différents système et procédés de multiplexage et de gestion de paquets ont été proposés dans l'état de l'art. Par exemple, FR2762735A1 concerne un procédé d'ordonnancement de paquets à pertes équitables dans un réseau type à intégration de services à haut débit, par exemple dans un réseau ATM (« Asynchronous Transfer Mode » selon la dénomination anglo-saxonne pour « mode de transfert asynchrone » en français). Dans FR2762735A1, plusieurs flux sont multiplexés vers un noeud en utilisant des files type FIFO (« First In First Out » selon la dénomination anglo-saxonne pour « Premier Entré Premier Sorti » en français), chaque file ayant un débit minimum fixe, les paquets des flux étant servis aux files de façon à ce que le rapport K de la partie du débit alloué au-delà du débit minimum sur la partie du débit instantané au-delà du débit minimum soit fixe en tout temps. Ainsi, chaque flux est traité de manière équitable dans l'ordonnancement de ses paquets, chaque flux ayant la même perte lorsque le débit maximal est atteint. Cette solution ne permet pas d'éviter les pertes de paquets et n'est donc pas applicable à un réseau sécurisé. En outre, cette solution ne concerne que l'envoi de données sur un canal unidirectionnel, elle ne s'applique donc pas à un canal bidirectionnel.

Dans WO2017119950A1, un système comprend un appareil de sortie couplé en communication avec un appareil d'entrée par l'intermédiaire d'au moins une connexion de réseau bidirectionnelle établie pour un site donné. Chacun des appareils d'entrée et de sortie comprend un catégoriseur de paquets pour catégoriser chacun des paquets de données de sortie en fonction de l'évaluation de paquet de ceux-ci par rapport à des règles de priorisation. Une commande de routage de paquets place chaque paquet de données sortant (de l'appareil d'entrée ou de sortie) selon la catégorisation de chaque paquet respectif pour commander l'envoi des paquets en fonction de la priorité de la file d'attente respective dans laquelle chaque paquet est placé.

Il existe donc un besoin d'avoir une solution permettant, dans un réseau points à points comprenant un canal bidirectionnel, le transport de paquets dans le canal bidirectionnel sans engorgement en gérant les différentes priorités des paquets.

### RESUME DE L'INVENTION

L'invention offre une solution aux problèmes évoqués précédemment, en permettant une gestion des priorités des messages du réseau et du débit en temps réel dans chacune des directions du canal bidirectionnel grâce à une fonction de multiplexage des messages conjointement à une fonction de régulation du trafic de messages.

Un aspect de l'invention concerne ainsi un procédé d'agrégation et de régulation de messages au sein d'un réseau comprenant :
- une pluralité de noeuds répartis en paires de noeuds, chaque paire de noeuds comprenant deux noeuds de la pluralité de noeuds et
- au moins deux dispositifs d'émission/réception, les deux dispositifs d'émission/réception communiquant à travers un canal bidirectionnel ayant un débit maximal défini, le canal bidirectionnel permettant le transport de données dans une première direction et dans une deuxième direction opposée à la première direction, chaque direction ayant un débit utile, chaque dispositif d'émission/réception définissant des files, chaque paire de noeuds de la pluralité de paires de noeuds ayant une pluralité de files attribuées, chaque pluralité de files attribuées à une paire de noeuds comprenant au moins une première et une deuxième files, la première file ayant une priorité élevée, la deuxième file ayant une priorité moins élevée que la première file,

le procédé étant mis en oeuvre par chacun des deux dispositifs d'émission/réception, le procédé comprenant les étapes de :
- réception d'une pluralité de messages, chaque message de la pluralité de messages provenant d'un noeud de la pluralité de noeuds appartenant à une paire de noeuds et étant destiné à un autre noeud de la pluralité de noeuds appartenant à la même paire de noeuds,
- segmentation de chaque message en paquets d'une taille prédéfinie,
- attribution de chaque paquet résultant de la segmentation à une file en fonction de l'origine, de la destination et d'une priorité du message,
- création d'une première trame et, si nécessaire, d'au moins une deuxième trame, les trames ayant une taille prédéfinie, et insertion des paquets des files dans au moins la première trame, et, si nécessaire, dans la au moins une deuxième trame, l'insertion des paquets attribués à la file de priorité la plus élevée étant réalisée avant l'insertion des paquets attribués à la file de priorité moins élevée, l'insertion étant réalisée d'abord dans la première trame puis, si nécessaire, dans la au moins une deuxième trame suivante,
- envoi, à travers le canal bidirectionnel sur un intervalle de temps prédéfini, de la première trame puis, si nécessaire, de la au moins une deuxième trame, les trames étant envoyées successivement, le nombre de trames envoyées sur l'intervalle de temps étant fonction du débit maximal du canal bidirectionnel et du débit utile dans chacune des directions de transport du canal bidirectionnel.

Grâce à l'invention, il est possible de gérer les débits dans chacune des directions dans un canal bidirectionnel contraint ainsi que les priorités des messages. En effet, la fonction d'agrégation des données gère avantageusement la segmentation des messages en paquets, l'attribution des paquets à des files en fonction de leur priorité, l'insertion des paquets des files prioritaires dans les trames envoyées les premières dans le canal bidirectionnel contraint, et la fonction de régulation gère avantageusement le débit dans chacune des directions du canal bidirectionnel contraint en ajustant en temps réel le nombre de trames à envoyer dans chaque intervalle de temps prédéfini.

On entend par « si nécessaire » le fait que des trames supplémentaires soient créées et des paquets soient insérés dans ces trames supplémentaires créées si la taille totale des paquets à envoyer est supérieure à la taille prédéfinie des trames déjà créées.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- les messages ont une taille maximale prédéfinie par priorité, et à l'étape d'attribution de paquets à une file en fonction de la priorité, si la taille du message auquel appartiennent les paquets dépasse la taille maximale de la priorité, les paquets du message sont attribués à la file de priorité directement inférieure à la file de priorité à laquelle ils devaient être attribués
- à l'étape d'envoi de trames à travers le canal bidirectionnel, le nombre de trames envoyées sur l'intervalle de temps est augmenté si la somme des débits utiles des deux directions de transport du canal bidirectionnel est inférieure au débit maximal du canal bidirectionnel. Ainsi, l'utilisation du canal bidirectionnel et donc le débit du canal bidirectionnel sont optimisés en temps réel ou quasi-temps réel.
- le débit utile d'une direction de transport est calculé par le dispositif d'émission/réception envoyant des trames dans la direction de transport, le calcul du débit étant réalisé en fonction du nombre de trames émises par seconde glissante. Ainsi, le dispositif émettant des trames dans une direction de transport connaît en temps réel le débit utile dans sa direction de transport. Le dispositif émettant dans l'autre sens connaît le débit utile dans l'autre direction de transport.
- chaque direction de transport a un débit maximal prédéfini fonction du débit maximal du canal bidirectionnel, la somme des débits maximaux de transport de chaque direction étant inférieure ou égale au débit maximal du canal bidirectionnel. Ainsi, l'utilisation du canal est optimisée, le débit d'une direction de transport étant fonction du débit dans l'autre direction de transport. En outre, cela permet de pouvoir privilégier une direction de transport plutôt qu'une autre.
- à l'étape d'envoi, si le débit utile d'une direction de transport atteint le débit maximal de ladite direction de transport, aucune trame n'est envoyée tant que le débit utile de la direction de transport est égal au débit maximal de la direction de transport,
- le procédé d'agrégation et de régulation de messages comprend, après l'étape de réception de messages, une étape d'identification de chaque message reçu, l'étape d'identification de chaque message reçu comprenant l'attribution d'une priorité à chaque message reçu en fonction d'au moins une information identifiée dans le message. Ainsi, une priorité est automatiquement attribuée à chaque message entrant en fonction d'au moins une donnée qu'il transporte.
- l'information identifiée est le type du message. Ainsi, une priorité est automatiquement attribuée au message en fonction de son type.
- le nombre de files définies par chaque dispositif d'émission/réception pour chaque paire de noeuds est supérieur ou égal à deux, et le niveau de priorité de chaque file au-delà de la deuxième file est inférieur au niveau de priorité de la file précédente. Ainsi, il est possible de gérer plusieurs niveaux de priorité, en particulier plusieurs priorités pour des messages de même type.
- les trames ont une taille prédéfinie égale à la taille de la charge utile d'une unité de transmission de la couche de transport utilisée. Ainsi, les trames sont de la taille de transmission physique maximale possible. Le calcul est effectué sans fragmentation pour éviter d'avoir une fragmentation au niveau physique et une fragmentation au niveau réseau, simplifiant alors les opérations de reconstruction.
- les paquets ont une taille prédéfinie de sorte qu'une trame puisse comprendre un nombre de paquets multiple du nombre de paires de noeuds du réseau. Ainsi, on permet une équité de traitement lorsque des messages arrivent de noeuds appartenant à toutes les paires de noeuds du réseau.
- que l'intervalle de temps d'envoi d'un nombre de trames est identique pour chaque direction de transport dans le canal bidirectionnel. Ainsi, on gère simplement le débit total utile en fonction du débit utile de chaque direction de transport.
- l'intervalle de temps d'envoi d'un nombre de trames est prédéfini en fonction du débit maximal du canal bidirectionnel et de la taille prédéfinie d'une trame.
- l'intervalle de temps d'envoi d'un nombre de trames est choisi parmi une liste d'intervalles de temps prédéfinie et paramétrable en fonction des performances d'un hôte du réseau, l'intervalle de temps étant choisi dans la liste prédéfinie d'intervalles de temps comme étant l'intervalle de temps directement inférieur au résultat de la division de la taille d'une trame par le débit maximal du canal bidirectionnel. Ainsi, la valeur de l'intervalle est légèrement plus performante par rapport au débit « souhaité » du point de vue des conditions physiques du réseau.
- les paquets sont insérés dans les trames de manière équilibrée entre les paires, par exemple selon un algorithme de type round-robin. Ainsi, on assure l'équité dans le traitement des messages de priorité identique provenant de noeuds appartenant à des paires différentes du réseau.
- chaque paquet comprend un segment de données appartenant à un message, un identifiant de la paire de noeuds à laquelle appartient le message, un niveau de priorité, un type de données du paquet, un identifiant de la donnée segmentée du paquet, un nombre de paquets restant dont les données appartiennent au même message que les données du paquet. Ainsi, on reconstitue sans difficultés le message une fois que tous les paquets ont été transportés par le canal.
- le procédé comprend une étape supplémentaire d'insertion dans une trame, après l'étape de création de trames, d'un paquet de statut du dispositif d'émission/réception émettant ladite trame, à destination de l'autre dispositif d'émission/réception réceptionnant ladite trame. Ainsi, chaque dispositif émetteur/récepteur connaît le débit utile dans les deux directions de transport et peut ajuster le débit utile dans sa direction d'émission.
- le paquet de statut du dispositif d'émission/réception comprend une information sur l'état des paires de noeuds du réseau, une information sur le statut de remplissage des files de chaque paire de noeuds, une information sur le débit utile estimé dans la direction de transport correspondant à la direction de transport dans laquelle le dispositif d'émission/réception envoie les trames.
- le protocole de transport utilisé est choisi parmi le protocole TCP ou UDP.

Un autre aspect de l'invention concerne un système de communication comprenant deux dispositifs d'émission/réception communiquant à travers un canal bidirectionnel ayant un débit maximal, le canal bidirectionnel permettant le transport de données dans une première direction et dans une deuxième direction opposée à la première direction, chaque dispositif d'émission/réception étant configuré pour mettre en oeuvre les étapes du procédé selon l'invention.

Chaque dispositif d'émission/réception du système de communication selon l'invention peut en outre comprendre :
- une interface d'émission/réception, configurée pour mettre en oeuvre l'étape de réception d'une pluralité de messages provenant d'un noeud de la pluralité de noeuds,
- un module de gestion de données configuré pour mettre en oeuvre les étapes de segmentation des messages, d'attribution des paquets à une file, de création de trames et d'insertion des paquets des files dans les trames,
- un module de régulation configuré pour mettre en oeuvre l'étape d'envoi des trames à travers le canal bidirectionnel.

L'invention est particulièrement adaptée à des communications multipoints au travers de passerelles de réseaux contraints et à débits limités tel qu'au sein de réseaux confidentiel défense « temps réel » à fortes contraintes d'isolement, de réseaux radio à bande passante fixe (à « TDM » : « Time-Division Multiplexing » selon la dénomination anglo-saxonne pour « multiplexage temporel » en français) ou encore de réseaux satellites à paiement au débit consommé ou à bande passante plafonnée.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau comprenant le système d'agrégation et de régulation de messages selon l'invention.
- La figure 2 montre une représentation schématique détaillée du système d'agrégation et de régulation de messages selon l'invention.
- La figure 3 montre une représentation schématique des échanges entre les entités du réseau lors de la mise en oeuvre du procédé d'agrégation et de régulation de messages selon l'invention.
- La figure 4 montre une représentation schématique des étapes de segmentation de messages et d'insertion de paquets dans des files selon le procédé d'agrégation et de régulation de messages selon l'invention.
- La figure 5 montre une représentation schématique de l'étape d'insertion des paquets des files dans des trames selon le procédé d'agrégation et de régulation de messages selon l'invention.
- La figure 6 montre une représentation schématique de l'étape d'envoi des trames à travers le canal bidirectionnel contraint selon le procédé d'agrégation et de régulation de messages selon l'invention, ainsi que la réception de trames à travers le canal bidirectionnel contraint.

### DESCRIPTION DETAILLEE

Les figures sont présentées à titre indicatif et nullement limitatif de l'invention.

Sauf précision contraire, un même élément apparaissant sur des figures différentes présente une référence unique.

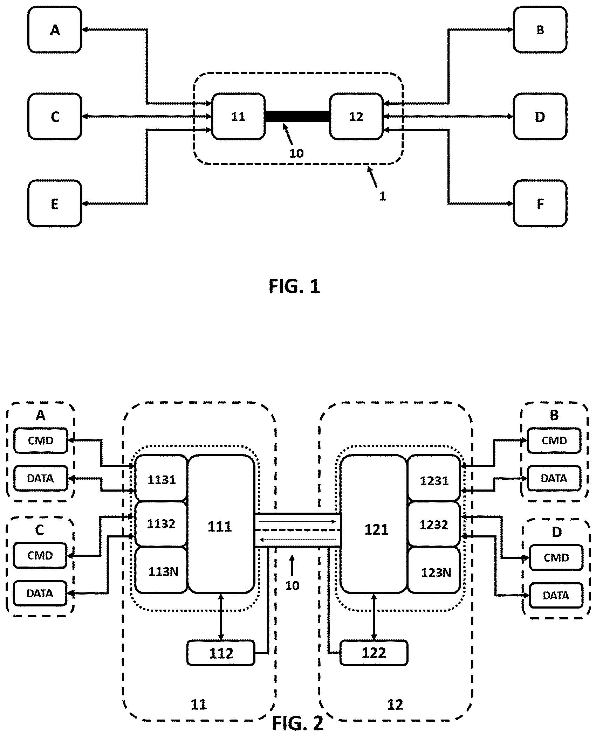

La Figure 1 montre une représentation schématique d'un réseau comprenant le système d'agrégation et de régulation de messages selon l'invention.

Le système d'agrégation et de régulation de messages 1 selon l'invention comprend deux dispositifs d'émission/réception 11 et 12. Les deux dispositifs d'émission/réception 11 et 12 communiquent au travers d'un canal bidirectionnel contraint 10. Le canal bidirectionnel 10 comprend deux directions de transport de données, une direction de transport permettant le transport de données du dispositif d'émission/réception 11 vers le dispositif d'émission/réception 12, l'autre direction de transport, opposée à la première direction de transport, permettant le transport de données du dispositif d'émission/réception 12 vers le dispositif d'émission/réception 11. La canal bidirectionnel 10 est full duplex, c'est-à-dire qu'il permet l'échange de données dans chaque direction de transport en même temps. Chaque direction de transport a un débit maximal fixe. Un tel canal bidirectionnel est « contraint » car il a un débit maximal. Le débit maximal de chaque direction de transport est la moitié du débit maximal du canal lorsque les deux directions de transport sont utilisées de manière égale, ou fonction de l'utilisation de chacune des directions de transport.

Les dispositifs d'émission/réception 11 et 12 peuvent être tout dispositif permettant l'émission et la réception de données à travers le canal bidirectionnel contraint 10. Par exemple, dans le cas où le canal bidirectionnel contraint est une liaison IP sécurisée, les dispositifs d'émission/réception 11 et 12 sont par exemple des ordinateurs, des serveurs, ou tout autre système de traitement comprenant une interface réseau Ethernet. Les dispositifs d'émission/réception 11 et 12 sont des points d'interconnexion du réseau.

Le réseau auquel appartient le système d'agrégation et de régulation de messages 1 comprend en outre une pluralité de noeuds applicatifs, chaque noeud appartenant à une paire de noeuds. Une paire de noeuds met en relation deux noeuds qui communiquent entre eux. Par exemple, une paire de noeuds A-B comprend les noeuds A et B tels que représentés à la Figure 1. Une autre paire de noeuds C-D comprend les noeuds C et D tels que représentés à la Figure 1. Enfin, une autre paire de noeuds E-F comprend les noeuds E et F tels que représentés à la Figure 1. Les noeuds du réseau de communication peuvent être toute entité apte à communiquer via le réseau, c'est-à-dire toute entité comprenant une interface avec le réseau, par exemple une application. Ainsi, dans le cas d'un réseau IP (« Internet protocol »), toute entité en mesure de communiquer via le protocole IP est un noeud.

A la Figure 1, les noeuds A à F peuvent appartenir au même réseau, ou à deux réseaux de communication différents, par exemple à un premier réseau de communication comprenant les noeuds A, C et E et à un deuxième réseau de communication comprenant les noeuds B, D et F. Les dispositifs d'émission/réception 11 et 12 peuvent respectivement appartenir au premier et au deuxième réseau ou à l'un des deux réseaux. Par la suite, on considérera que l'ensemble des noeuds A à F et les dispositifs d'émission/réception 11 et 12 appartiennent tous au même réseau, bien que l'invention couvre plus de cas.

L'invention peut être mise en oeuvre dans tout réseau utilisant la suite de protocoles internet (« IP » pour « Internet Protocol »), mettant en oeuvre par exemple les protocoles de transport UDP (« User Datagram Protocol » selon la dénomination anglo-saxonne pour « protocole de datagramme utilisateur » en français) ou TCP (« Transmission Control Protocol » selon la dénomination anglo-saxonne pour « protocole de contrôle de transmissions »). L'invention peut aussi être mise en oeuvre dans un réseau radio comprenant un canal bidirectionnel contraint, par exemple les réseaux radio à bande passante fixe (TDM), par exemple un réseau selon la norme GSM (« Global System for Mobile communications » selon la dénomination anglo-saxonne pour « système global pour les communications mobiles »). L'invention peut aussi être mise en oeuvre dans un réseau satellite comprenant un canal bidirectionnel contraint. L'invention peut en fait être mise en oeuvre dans tout réseau comprenant un canal bidirectionnel contraint.

La figure 2 montre une représentation schématique détaillée du système d'agrégation et de régulation de messages selon l'invention.

Le système d'agrégation et de régulation de messages selon l'invention comprend les deux dispositifs d'émission/réception 11 et 12. Chaque dispositif d'émission/réception 11 et 12 comprend une interface d'émission/réception 113, configurée pour recevoir une pluralité de messages provenant des noeuds de la pluralité de noeuds A à F. L'interface d'émission/réception 113 est représentée en plusieurs parties 1131 à 113N et 1231 à 123N, dans le cas où elle communique avec N noeuds du réseau pour faciliter la compréhension. Chaque noeud peut ainsi envoyer des données au dispositif d'émission/réception 11 ou 12, en fonction de sa position, et recevoir des données du même dispositif d'émission/réception 11 ou 12. Par exemple, les noeuds A et C peuvent communiquer avec le dispositif d'émission/réception 11 et les noeuds B et D peuvent communiquer avec le dispositif d'émission/réception 12.

Chaque noeud peut envoyer des messages de différents types. Pour une compréhension plus simple, la Figure 2 ne représente que deux types CMD et DATA, mais l'invention couvre tous les cas où les noeuds envoient des messages de plus de deux types ou n'envoient des messages que d'un même type. Dans la suite de la description, les noeuds envoient des messages d'un premier type « commande » CMD, qui sont par exemple des messages de signalisation, et des messages d'un deuxième type « données » DATA, qui sont par exemple des messages transportant des données. Pour la suite de la description, on considérera que les messages de type commande CMD ont une priorité supérieure aux messages de type données DATA. Le niveau de priorité des différents types peut être défini par configuration au niveau des dispositifs d'émission/réception 11 et 12 comme expliqué par la suite. Le niveau de priorité dépend des données et du réseau. Ainsi, des messages d'un même type peuvent avoir des priorités différentes, comme expliqué par la suite.

Les dispositifs d'émission/réception 11 et 12 comprennent chacun un module de gestion de données 111 et 121 configuré pour mettre en oeuvre les étapes de segmentation des messages, d'attribution des paquets à une file, de création de trames et d'insertion des paquets des files dans les trames du procédé selon l'invention. Le procédé selon l'invention et ses étapes seront développés par la suite. Le module de gestion de données 111 et 121 peut être un module physique, comprenant par exemple une mémoire et un processeur configuré pour mettre en oeuvre les instructions stockées par la mémoire, ou un module logiciel, ou une combinaison des deux.

Les dispositifs d'émission/réception 11 et 12 comprennent chacun un module de régulation 112 et 122 configuré pour gérer l'envoi des trames à travers le canal bidirectionnel contraint 10 et pour gérer les débits du canal 10 dans chacune de ses directions de transport.

Le modules de régulation 112 et 122 de chacun des dispositifs d'émission/réception 11 et 12 gèrent l'envoi des trames en donnant des instructions respectivement aux modules de gestion des données 111 et 121, les modules de gestion des données 111 et 121 ayant en charge l'envoi des données à travers le canal bidirectionnel contraint 10 et la réception des données envoyées par le module de gestion des données de l'autre dispositif d'émission/réception 11 ou 12.

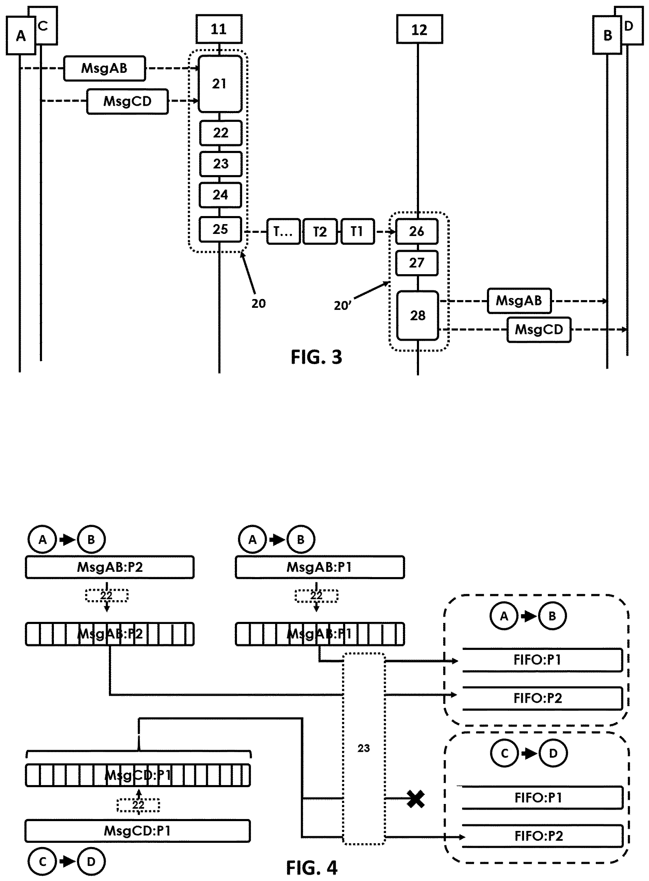

La figure 3 montre une représentation schématique des échanges entre les entités du réseau lors de la mise en oeuvre du procédé d'agrégation et de régulation de messages selon l'invention.

Un premier mode de réalisation du procédé 20 d'agrégation et de régulation de message selon l'invention est représenté à la Figure 3, grâce à la représentation des échanges entre les différentes entités. Deux échanges de données, entre le noeud A et le noeud B appartenant à la paire de noeuds A-B, et entre le noeud C et le noeud D appartenant à la paire de noeuds C-D sont représentés à la Figure 3. Dans la représentation de la Figure 3, le dispositif d'émission/réception 11 met en oeuvre le procédé 20, car on ne représente les échanges de données que dans un sens, des noeuds A et C vers les noeuds B et D, pour faciliter la compréhension. Cependant, les dispositifs d'émission/réception 11 et 12 peuvent mettre en oeuvre tous les deux, simultanément, le procédé 20. Ainsi, ce qui est décrit par la suite mis en oeuvre par le dispositif d'émission/réception 11 s'applique mutatis mutandis au dispositif d'émission/réception 12, avec les références modifiées.

Dans une première étape 21 du procédé 20, le dispositif d'émission/réception 11 reçoit une pluralité de messages Msg des noeuds A et C, via ses interface d'émission/réception 113 et en particulier 1131 et 1132. Des tels messages peuvent être de type « commande » CMD ou de type « données » DATA, de même type ou de types différents. Cette réception 21 résulte de l'envoi d'un message MsgAB du noeud A vers le noeud B et d'un message MsgCD du noeud C vers le noeud D, les messages devant passer via les dispositifs d'émission/réception 11 et 12 et donc via le canal bidirectionnel contraint 10.

Une deuxième étape du procédé 20 comprend la segmentation de chaque message reçu en paquets d'une taille prédéfinie. Cette étape est notamment représentée à la Figure 4.

La figure 4 montre une représentation schématique des étapes de segmentation de messages et d'insertion de paquets dans des files selon le procédé d'agrégation et de régulation de messages selon l'invention.

Comme représenté à la Figure 4, chaque message reçu est segmenté en paquets à l'étape 21. Plus tard dans le procédé, ces paquets seront insérés dans des files puis, à partir des files, seront insérés dans des trames. La taille prédéfinie des paquets dépend de la taille prédéfinie des trames. Ainsi, la taille prédéfinie des paquets sera discutée par la suite.

Cette étape de segmentation permet de gérer plus efficacement les différents débits par la suite, permettant d'éviter des engorgements au niveau des dispositifs d'émission/réception 11 et 12 et du canal bidirectionnel contraint 10.

En référence à la Figure 3, le procédé 20 comprend ensuite une étape 23 d'insertion des paquets résultant de la segmentation des messages à l'étape 22 dans des files.

Les files sont définies au niveau du module de gestion de données 111. On appelle « file » un mécanisme pour lequel tout objet ayant été inséré le premier dans le mécanisme en sort le premier. Ces files sont aussi appelées « FIFO » (« First In First Out » selon la dénomination anglo-saxonne pour « Premier Entré Premier Sorti » en français). A l'étape 23, les paquets sont insérés dans ces files. Ainsi, le premier paquet inséré dans une telle file, ou FIFO, en sortira le premier. Le deuxième paquet inséré dans une FIFO en sortira le deuxième, et ainsi de suite.

Le module de gestion des données 111 définit, pour chaque paire de noeuds, plusieurs files. Ainsi, pour la paire de noeuds A-B, le module de gestion des données 111 définit au moins deux files P1 et P2, chaque file étant associé à une priorité, comme représenté à la Figure 4.

A la Figure 4, le module de gestion de données 111 remplit les files qu'il définit avec les paquets segmentés à l'étape 22, en fonction de la priorité des messages à l'origine des paquets. Par exemple, pour un message MsgAB:P1 de priorité P1, c'est-à-dire de priorité élevée, les paquets résultant de la segmentation de ce message seront insérés dans la file FIFO de la paire A-B associée à la priorité P1 la plus élevée. Un tel message MsgAB:P1 est par exemple un message de type « commande » CMD, auquel le module de gestion de données 111 a attribué une priorité élevée P1. Cette attribution d'une priorité à un type de message peut être réalisée lors d'une étape (non représentée) d'identification du message, comprenant l'identification du message en fonction d'au moins une information du message. Cette étape d'identification est réalisée entre l'étape de réception 21 et l'étape de segmentation 22. Cette étape d'identification peut permettre en outre de connaître à quelle paire de noeud appartiennent les noeuds émetteur et destinataire, ainsi que d'obtenir des informations sur la taille du message par exemple. L'insertion de l'étape 22 est réalisée tant que la file FIFO:P1 n'est pas remplie. Dans l'exemple représenté à la Figure 4, les paquets résultant la segmentation du message MsgAB:P1 peuvent tous être introduits dans la file FIFO:P1.

Pour le message MsgAB:P2 de priorité P2, c'est-à-dire de priorité moins élevée que la priorité élevée P1, les paquets résultant de la segmentation de ce message seront insérés dans la file FIFO de la paire A-B associée à la priorité P2 moins élevée que la priorité élevée P1. Un tel message MsgAB:P2 est par exemple un message de type « données » DATA, auquel le module de gestion de données 111 a attribué une priorité P2. Dans l'exemple représenté à la Figure 4, les paquets résultant la segmentation du message MsgAB:P2 peuvent tous être introduits dans la file FIFO:P2.

Sans s'écarter de l'invention, chaque dispositif d'émission/réception 11 et 12 peut définir une pluralité de priorités, supérieure au nombre de priorités représentées dans les Figures. Le nombre de priorités est égal pour chacun des dispositifs d'émission/réception 11 et 12.

Pour le message MsgCD:P1 de priorité P1, c'est-à-dire de priorité élevée, les paquets résultant de la segmentation de ce message devraient être insérés dans la file FIFO de la paire C-D associée à la priorité P1 élevée. Un tel message MsgCD:P1 est par exemple un message de type « commande » CMD, auquel le module de gestion de données 111 a attribué une priorité P1. Dans l'exemple représenté à la Figure 4, le nombre de paquets résultant de la segmentation du message MsgCD:P1 excède le nombre maximal de paquets admissibles pour les messages de type « commande » CMD et ne peuvent être introduits dans la file FIFO:P1 de priorité élevée. Par ce verrou, l'invention permet de garantir une latence minimale de transmission pour l'ensemble des paires et éviter une congestion au niveau du canal 10. Les paquets rejetés, c'est-à-dire les paquets résultant de la segmentation du message MsgCD:P1, sont déclassés et insérés dans la file FIFO de la paire C-D directement de priorité inférieure P2 à la priorité élevée P1.

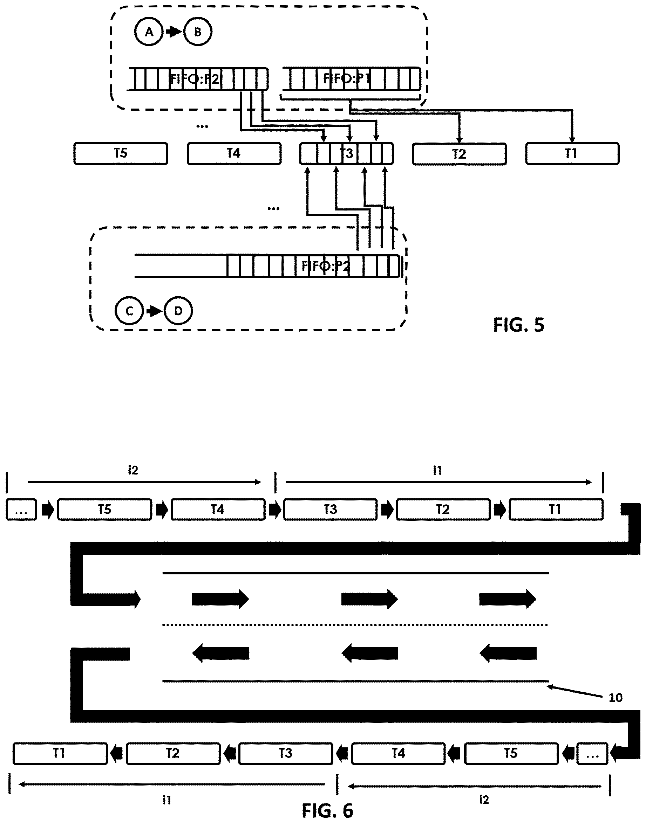

Dans une étape 23, représentée à la Figure 3 et à la Figure 5, des trames d'une taille prédéfinie sont créées et les paquets attribués aux files sont insérés dans les trames, l'insertion des paquets attribués à la première file de priorité élevée étant réalisée avant l'insertion des paquets attribués à la deuxième file de priorité moins élevée, l'insertion étant réalisée dans l'ordre d'émission des trames.

La figure 5 montre une représentation schématique de l'étape d'insertion des paquets des files dans des trames selon le procédé d'agrégation et de régulation de messages selon l'invention.

Comme représentée à la Figure 5, l'étape 24 d'insertion de paquets attribués à des files dans des trames est réalisée selon une séquence décrite ci-après :

Tout d'abord, dans une première sous-étape de l'étape 24, un nombre de trames est créé en fonction du nombre de paquets. Les trames ont une taille fixe prédéfinie. Préférentiellement, les trames ont une taille égale à la taille de la charge utile d'une unité de transmission de la couche de transport utilisée. Par exemple, si la couche de transport utilise UDP et la couche réseau IP, la charge utile d'une unité de transmission est de 1472 octets, obtenus par la soustraction des headers IP/UDP de 28 octets au MTU (« Maximum Transmission Unit» selon la dénomination anglo-saxonne pour « unité maximale de transmission en français) Ethernet (couche liaison de données et physique) d'une valeur 1500 octets. Ainsi, les trames sont de la taille de transmission physique maximale possible. Le calcul est effectué sans fragmentation pour éviter d'avoir une fragmentation au niveau physique et une fragmentation au niveau réseau, simplifiant alors les opérations de reconstruction. Une fois que la taille des trames est prédéfinie, par exemple lors d'une étape d'initialisation (non représentée), la taille des paquets peut être définie.

Les paquets ont une taille prédéfinie de sorte que le rapport entre le nombre total d'octets de contrôle et nombre total d'octets de la charge utile d'une trame soit minimisé, inférieur à 10% par exemple. Afin de préserver l'équité de traitement par les dispositifs d'émission/réception 11 et 12 des différents noeuds et paires de noeuds du réseau, dans un même intervalle de temps, les paquets de messages provenant de chacune des paires de noeuds du réseau sont insérés dans une trame, ou plusieurs trames successives si le nombre de paires de noeuds est conséquent. Chaque paquet comprend au moins un segment de données appartenant à un message, un identifiant de la paire de noeuds à laquelle appartient le message, un niveau de priorité, un type de données du paquet, un identifiant de la donnée segmentée du paquet, un nombre de paquets restant dont les données appartiennent au même message que les données du paquet. La taille des paquets peut aussi être prédéfinie lors d'une étape d'initialisation (non représentée). Une réinitialisation est aussi possible, automatique ou non, en fonction des changements du réseau ou des besoins des noeuds du réseau.

Préférentiellement, les messages ayant une priorité élevée ont une taille maximale prédéfinie, afin de garantir une latence faible pour l'envoi de messages de priorité élevée quelle que soit la paire, par exemple la taille d'un ou deux paquets. Lorsqu'un message de priorité élevé est réceptionné à l'étape 21 au niveau du dispositif d'émission/réception 11 ou 12, et que la taille dudit message est supérieure à la taille maximale prédéfinie pour un paquet de priorité élevée, l'ensemble du message est déclassé en priorité immédiatement moins élevée, par exemple de la priorité P1 vers la priorité P2. Alternativement, l'invention peut prévoir l'envoi d'un message d'erreur.

Une deuxième sous-étape de l'étape 24 comprend l'insertion des paquets des files de priorité la plus élevée dans les trames créées. Les premières trames créées comprennent ainsi les paquets dont les messages ont la priorité la plus élevée.

Les paquets sont répartis un par un dans les trames, ou en groupes de petits nombres de paquets, en alternant de manière équitable entre les files. Dans l'exemple de la Figure 5, seule une file FIFO de priorité P1 existe, la file FIFO:P1 de la paire de noeuds A-B. Ainsi, les trames T1 et T2 ne comprennent que des paquets de la file FIFO:P1 de la paire de noeuds A-B. A la Figure 5, les paquets de la file FIFO:P1 de la paire de noeuds A-B sont insérés dans les trames T1 et T2.

Une sous-étape suivante de l'étape 24 comprend l'insertion des paquets des files de priorité directement inférieure à la priorité précédente dans les trames. Cette sous-étape 24 n'est réalisée que lorsque toutes les files de priorité(s) supérieure(s) sont vides.

Par exemple, comme représenté à la Figure 5, la priorité directement inférieure à la priorité P1 élevée est la priorité P2. Les paquets des files FIFO de priorité P2 de chacune des paires de noeuds A-B et C-D sont insérées dans les trames T3 à T5 en alternant de manière équitable entre les files. Pour cela, un indicateur, par priorité de FIFO, permet de cibler la dernière paire placée. L'indicateur correspond à un pointeur et permet d'éviter de privilégier des paires par rapport aux autres. Cela permet un traitement équitable de chaque paire de noeuds sans en privilégier une par rapport aux autres. Bien que seul le remplissage alterné de la trame T3 soit représenté à la Figure 5 pour plus de clarté, les trames suivantes T4 et T5 accueillent aussi des paquets des files FIFO:P2AB et FIFO:P2CD. L'insertion dans les trames T4 et T5 est aussi réalisée en alternant les paquets des deux files.

La figure 6 montre une représentation schématique de l'étape d'envoi des trames à travers le canal bidirectionnel contraint selon le procédé d'agrégation et de régulation de messages selon l'invention, ainsi que la réception de trames à travers le canal bidirectionnel contraint.

Une fois que les trames ont été remplies, c'est-à-dire qu'on y a inséré des paquets, elles sont envoyées, dans l'ordre de leur remplissage, à travers le canal bidirectionnel vers l'autre dispositif d'émission/réception, par exemple le dispositif d'émission/réception 12 à la Figure 3, dans une étape 25. Ainsi, les trames remplies les premières seront envoyées les premières.

L'envoi est réalisé sur un intervalle de temps i prédéfini. Sur l'intervalle de temps i prédéfini, un nombre de trames défini est envoyé, le nombre de trames envoyées sur l'intervalle de temps étant fonction du débit maximal du canal bidirectionnel 10 et du débit utile dans chacune des directions de transport du canal bidirectionnel 10.

L'intervalle de temps i est identique pour chaque direction de transport dans le canal bidirectionnel contraint 10. Il est prédéfini en fonction du débit maximal du canal bidirectionnel et de la taille prédéfinie d'une trame. L'intervalle de temps i est choisi parmi une liste d'intervalles de temps prédéfinie en fonction des performances de l'hôte du réseau, l'intervalle de temps étant choisi dans la liste prédéfinie d'intervalles de temps comme étant l'intervalle de temps directement inférieur au résultat de la division de la taille d'une trame par le débit maximal du canal bidirectionnel. La plage de valeurs dépend des performances de la cible (cpu, périphériques, hôte du réseau), des performances de la couche physique de transmission et de la latence minimale que l'on souhaite atteindre. Il est par exemple possible de voir la plage de valeurs comme étant des paliers, par exemple compatibles avec les horloges matérielles du système, plus facile à gérer et analyser qu'une valeur calculée. Par exemple, on peut définir la plage d'intervalles de temps i suivante : i_ARRAY = { 1.0, 2.5, 5.0, 10.0 }.

L'intervalle de temps est ensuite calculé puis arrondi à la valeur inférieure de la plage d'intervalles de temps i_ARRAY.

Le calcul peut par exemple être le résultat de la division de la taille d'une trame par le débit maximal du canal bidirectionnel contraint 10. Par exemple, avec un débit maximal de 512000 bps et une taille de trame de 1472 octets, le calcul donne (1472*8)/512000 = 23 ms. On sélectionne alors la valeur directement inférieure dans la plage d'intervalles de temps i_ARRAY soit un intervalle de temps i = 10ms. Ainsi, la valeur de l'intervalle est légèrement plus performante par rapport au débit demandé du point de vue des conditions physiques. La valeur de l'intervalle peut être fixée lors de l'étape d'initialisation (non représentée).

Des trames sont envoyées dans chaque intervalle de temps prédéfini i1 à iN pour N intervalles. Préférentiellement, un nombre de trames à envoyer est prédéfini, par exemple pendant l'étape d'initialisation, par exemple fixé à 1, soit une trame à envoyer par intervalle de temps i. Lors de l'envoi des trames, le nombre de trames envoyées sur l'intervalle de temps est fonction du débit maximal du canal bidirectionnel 10 et du débit utile dans chacune des directions de transport du canal bidirectionnel, c'est-à-dire que le module de régulation 112 mesure sur chaque seconde glissante le nombre de trames émises, et le compare au débit maximal du canal bidirectionnel contraint 10 et au débit utile dans l'autre direction de transport. Si l'intervalle de temps i est déterminé au minimum et que cet intervalle ne permet pas d'atteindre le débit maximal de la direction de transport, le nombre de trames émises par intervalle de temps i est incrémenté jusqu'à que le débit escompté soit atteint, c'est-à-dire qu'il y a temporairement plus d'une trame émise par intervalle de temps i bien que le nombre d'une trame par intervalle de temps i ait été prédéfini à l'initialisation.

Le nombre de trames envoyées sur l'intervalle de temps i est augmenté si la somme des débits utiles des deux directions de transport du canal bidirectionnel est inférieure au débit maximal du canal bidirectionnel. En outre, si le débit utile d'une direction de transport atteint le débit maximal de ladite direction de transport, aucune trame n'est envoyée tant que le débit utile de la direction de transport est égal au débit maximal de la direction de transport. Le débit maximal d'une direction de transport peut être adapté en fonction du débit utile de chacune des deux directions de transport. Ainsi, si, dans sa direction de transport correspondant à sa direction d'envoi, le module de régulation 112 observe qu'il a besoin de plus de débit et qu'il sait que l'autre direction de transport utilise moins de débit que son débit maximal, c'est-à-dire que le canal bidirectionnel contraint n'est pas utilisé à son débit maximal, le module de régulation 112 peut augmenter le débit maximal sur sa direction de transport correspondant à sa direction d'envoi et en informer l'autre module de régulation 122.

Pour en informer l'autre module de régulation 122, le procédé peut comprendre une étape supplémentaire d'insertion dans une trame, après l'étape de création de trames, d'un paquet de statut du dispositif d'émission/réception 11 émettant ladite trame, à destination de l'autre dispositif d'émission/réception 12 réceptionnant ladite trame. Ainsi, chaque dispositif émetteur/récepteur 11 et 12 connaît le débit utile dans les deux directions de transport et peut ajuster le débit utile dans sa direction d'émission. Les paquets de statut des dispositifs d'émission/réception 11 et 12 peuvent par exemple comprendre une information sur l'état des paires de noeuds du réseau, une information sur le statut de remplissage des files de chaque paire de noeuds, une information sur le débit utile estimé dans la direction de transport correspondant à la direction de transport dans laquelle le dispositif d'émission/réception envoie les trames.

Ainsi, chaque module de régulation connaît l'état complet du canal bidirectionnel contraint 10 et peut ajuster le nombre de trames envoyées par intervalle de temps i pour gérer le débit dans chacune des directions de transport.

Après envoi, le dispositif d'émission /réception à l'autre sortie du canal 10 réceptionne les trames, comme représenté à la Figure 6, dans une étape 26 du procédé 20'. Le procédé 20' est mis en oeuvre par le dispositif d'émission/réception n'ayant pas émis les trames, c'est-à-dire réceptionnant les trames, afin de reformer les messages et de les envoyer au noeud destinataire. Dans une étape 27, le module de gestion des données 121 du dispositif d'émission/réception 12 dé-segmente, c'est-à-dire qu'il recrée les messages à partir des paquets des trames reçues, les paquets comprenant les informations nécessaires à la recréation des messages comme indiqué précédemment. Dans une étape 28, le dispositif d'émission/réception 12 récepteur des trames envoie, via son interface d'émission/réception 123, les messages recréés à leur noeud destinataire.

Ainsi, la présente invention permet de gérer, en temps réel ou en quasi-temp réel, le débit dans chacune des directions de transport d'un canal bidirectionnel 10 ayant un débit maximal, tout en prenant en compte la priorité des messages et sans perte d'informations.

## Revendications

1. Procédé d'agrégation et de régulation de messages au sein d'au moins un réseau comprenant :
- une pluralité de noeuds répartis en paires de noeuds et
- au moins deux dispositifs d'émission/réception, les deux dispositifs d'émission/réception communiquant à travers un canal bidirectionnel ayant un débit maximal défini, le canal bidirectionnel permettant le transport de données dans une première direction et dans une deuxième direction opposée à la première direction, chaque direction ayant un débit utile, chaque dispositif d'émission/réception définissant des files, chaque paire de noeuds de la pluralité de paires de noeuds ayant une pluralité de files attribuées, chaque pluralité de files attribuées à une paire de noeuds comprenant au moins une première et une deuxième files, la première file ayant une priorité élevée, la deuxième file ayant une priorité moins élevée que la première file,
le procédé étant mis en oeuvre par chacun des deux dispositifs d'émission/réception, le procédé comprenant les étapes de :
- réception d'une pluralité de messages, les messages de la pluralité de messages provenant de noeuds de la pluralité de noeuds et étant destinés à d'autres noeuds de la pluralité de noeuds, le noeud de destination de chaque message appartenant à la même paire de noeuds que le noeud de provenance du message,
- segmentation de chaque message en paquets d'une taille prédéfinie,
- attribution de chaque paquet résultant de la segmentation à une file en fonction de l'origine, de la destination et d'une priorité du message,
- création d'une première trame et, si nécessaire, d'au moins une deuxième trame, les trames ayant une taille prédéfinie, et insertion des paquets des files dans au moins la première trame, et, si nécessaire, dans la au moins une deuxième trame, l'insertion des paquets attribués à la file de priorité la plus élevée étant réalisée avant l'insertion des paquets attribués à la file de priorité moins élevée, l'insertion étant réalisée d'abord dans la première trame puis, si nécessaire, dans la au moins une deuxième trame suivante,
- envoi, à travers le canal bidirectionnel sur un intervalle de temps prédéfini, de la première trame puis, si nécessaire, de la au moins une deuxième trame, les trames étant envoyées successivement, le nombre de trames envoyées sur l'intervalle de temps étant fonction du débit maximal du canal bidirectionnel et du débit utile dans chacune des directions de transport du canal bidirectionnel.

2. Procédé d'agrégation et de régulation de messages selon la revendication précédente **caractérisé en ce que** les messages ont une taille maximale prédéfinie par priorité, et **en ce qu'**à l'étape d'attribution de paquets à une file en fonction de la priorité, si la taille du message auquel appartiennent les paquets dépasse la taille maximale de la priorité, les paquets du message sont attribués à la file de priorité directement inférieure à la file de priorité à laquelle ils devaient être attribués.

3. Procédé d'agrégation et de régulation de messages selon l'une quelconque des revendications précédentes **caractérisé en ce qu'**à l'étape d'envoi de trames à travers le canal bidirectionnel, le nombre de trames envoyées sur l'intervalle de temps est augmenté si la somme des débits utiles des deux directions de transport du canal bidirectionnel est inférieure au débit maximal du canal bidirectionnel.

4. Procédé d'agrégation et de régulation de messages selon l'une quelconque des revendications précédentes **caractérisé en ce que** le débit utile d'une direction de transport est calculé par le dispositif d'émission/réception envoyant des trames dans la direction de transport, le calcul du débit étant réalisé en fonction du nombre de trames émises par seconde glissante.

5. Procédé d'agrégation et de régulation de messages selon l'une quelconque des revendications précédentes **caractérisé en ce que** chaque direction de transport a un débit maximal prédéfini fonction du débit maximal du canal bidirectionnel, la somme des débits maximaux de transport de chaque direction étant inférieure ou égale au débit maximal du canal bidirectionnel.

6. Procédé d'agrégation et de régulation de messages selon la revendication précédente **caractérisé en ce qu'**à l'étape d'envoi, si le débit utile d'une direction de transport atteint le débit maximal de ladite direction de transport, aucune trame n'est envoyée tant que le débit utile de la direction de transport est égal au débit maximal de la direction de transport.

7. Procédé d'agrégation et de régulation de messages selon l'une quelconque des revendications précédentes **caractérisé en ce qu'**il comprend, après l'étape de réception de messages, une étape d'identification de chaque message reçu, l'étape d'identification de chaque message reçu comprenant l'attribution d'une priorité à chaque message reçu en fonction d'au moins une information identifiée dans le message.

8. Procédé d'agrégation et de régulation de messages selon la revendication précédente **caractérisé en ce que** l'information identifiée est le type du message.

9. Procédé d'agrégation et de régulation de messages selon l'une quelconque des revendications précédentes **caractérisé en ce que** le nombre de files définies par chaque dispositif d'émission/réception pour chaque paire de noeuds est supérieur à deux, et **en ce que** le niveau de priorité de chaque file au-delà de la deuxième file est inférieur au niveau de priorité de la file précédente.

10. Procédé d'agrégation et de régulation de messages selon l'une quelconque des revendications précédentes **caractérisé en ce que** les trames ont une taille prédéfinie égale à la taille de la charge utile d'une unité de transmission de la couche de transport utilisée.

11. Procédé d'agrégation et de régulation de messages selon l'une quelconque des revendications précédentes **caractérisé en ce que** les paquets ont une taille prédéfinie de sorte que le rapport entre le nombre total d'octets de contrôle et nombre total d'octets de la charge utile d'une trame soit inférieur à 10%.

12. Procédé d'agrégation et de régulation de messages selon l'une quelconque des revendications précédentes **caractérisé en ce que** l'intervalle de temps d'envoi d'un nombre de trames est identique pour chaque direction de transport dans le canal bidirectionnel.

13. Procédé d'agrégation et de régulation de messages selon l'une quelconque des revendications précédentes **caractérisé en ce que** l'intervalle de temps d'envoi d'un nombre de trames est prédéfini en fonction du débit maximal du canal bidirectionnel et de la taille prédéfinie d'une trame.

14. Procédé d'agrégation et de régulation de messages selon la revendication précédente **caractérisé en ce que** l'intervalle de temps d'envoi d'un nombre de trames est choisi parmi une liste d'intervalles de temps prédéfinie en fonction des performances d'un hôte du réseau, l'intervalle de temps étant choisi dans la liste prédéfinie d'intervalles de temps comme étant l'intervalle de temps directement inférieur au résultat de la division de la taille d'une trame par le débit maximal du canal bidirectionnel.

15. Système de communication comprenant deux dispositifs d'émission/réception communiquant à travers un canal bidirectionnel ayant un débit maximal, le canal bidirectionnel permettant le transport de données dans une première direction et dans une deuxième direction opposée à la première direction, chaque dispositif d'émission/réception étant configuré pour mettre en oeuvre les étapes du procédé selon l'une quelconque des revendications précédentes.

16. Système de communication selon la revendication précédente, le système étant **caractérisé en ce que** chaque dispositif d'émission/réception comprend :
- une interface d'émission/réception, configurée pour mettre en oeuvre l'étape de réception d'une pluralité de messages provenant d'un noeud de la pluralité de noeuds,
- un module de gestion de données configuré pour mettre en oeuvre les étapes de segmentation des messages, d'attribution des paquets à une file, de création de trames et d'insertion des paquets des files dans les trames,
- un module de régulation configuré pour mettre en oeuvre l'étape d'envoi des trames à travers le canal bidirectionnel.

## Patentansprüche

1. Verfahren zur Aggregation und Steuerung von Nachrichten in mindestens einem Netzwerk, umfassend:
- eine Vielzahl von als Knotenpaare verteilten Knoten und
- mindestens zwei Sende-/Empfangsvorrichtungen, wobei die beiden Sende-/Empfangsvorrichtungen über einen einen definierten maximalen Durchsatz aufweisenden bidirektionalen Kanal kommunizieren, wobei der bidirektionale Kanal den Transport von Daten jeweils in einer ersten Richtung und in einer der ersten Richtung entgegengesetzten zweiten Richtung, die jeweils einen Nutzdatendurchsatz aufweisen, ermöglicht, wobei jede Sende-/Empfangsvorrichtung Warteschlangen definiert, jedes Knotenpaar der Vielzahl von Knotenpaaren eine Vielzahl von Warteschlangen aufweist, jede einem Knotenpaar zugewiesene Vielzahl von Warteschlangen mindestens eine erste und eine zweite Warteschlange umfasst, die erste Warteschlange eine hohe Priorität aufweist, die zweite Warteschlange eine niedrigere Priorität als die erste Warteschlange aufweist, und
wobei das Verfahren von jeder der beiden Sende-/Empfangsvorrichtungen implementiert wird, und das Verfahren die folgenden Schritte umfasst:
- Empfangen einer Vielzahl von Nachrichten, wobei die Nachrichten der Vielzahl von Nachrichten von Knoten der Vielzahl von Knoten stammen und für andere Knoten der Vielzahl von Knoten bestimmt sind, wobei der Zielknoten einer jeden Nachricht zu demselben Knotenpaar wie der Knoten, von dem die Nachricht stammt, gehört,
- Segmentieren jeder Nachricht in Pakete einer vordefinierten Größe,
- Zuweisen eines jeden aus dem Segmentieren resultierenden Pakets zu einer Warteschlange in Abhängigkeit vom Ursprung, dem Ziel und der Priorität der Nachricht,
- Erstellen eines ersten Rahmens und gegebenenfalls mindestens eines zweiten Rahmens, wobei die Rahmen eine vordefinierte Größe aufweisen, und Einfügen der Pakete der Warteschlangen in mindestens den ersten Rahmen und gegebenenfalls in den mindestens einen zweiten Rahmen, wobei das Einfügen der der Warteschlange mit der höchsten Priorität zugewiesenen Pakete vor dem Einfügen der der Warteschlange mit der niedrigeren Priorität zugewiesenen Pakete erfolgt, wobei das Einfügen zuerst in den ersten Rahmen und dann, falls erforderlich, in den mindestens einen folgenden zweiten Rahmen erfolgt,
- Senden des ersten Rahmens über den bidirektionalen Kanal in einem vordefinierten Zeitintervall, dann, falls erforderlich, des mindestens zweiten Rahmens, wobei die Rahmen nacheinander gesendet werden, die Anzahl der in dem Zeitintervall gesendeten Rahmen vom maximalen Durchsatz des bidirektionalen Kanals und dem Nutzdatendurchsatz in jeder der Transportrichtungen des bidirektionalen Kanals abhängt.

2. Verfahren zur Aggregation und Steuerung von Nachrichten nach dem vorstehenden Anspruch, **dadurch gekennzeichnet, dass** die Nachrichten eine durch Priorität vordefinierte maximale Größe aufweisen und dass im Schritt des Zuweisens von Paketen zu einer Warteschlange in Abhängigkeit von der Priorität, wenn die Größe der Nachricht, zu der die Pakete gehören, die maximale Größe der Priorität überschreitet, die Pakete der Nachricht der Warteschlange der Priorität direkt unterhalb der Warteschlange der Priorität, der sie hätten zugewiesen werden sollen, zugewiesen werden.

3. Verfahren zur Aggregation und Steuerung von Nachrichten nach einem der vorstehenden Ansprüche, **dadurch gekennzeichnet, dass** beim Schritt des Sendens von Rahmen über den bidirektionalen Kanal, wenn die Summe des Nutzdatendurchsatzes der beiden Transportrichtungen des bidirektionalen Kanals kleiner als der maximale Durchsatz des bidirektionalen Kanals ist, die Anzahl der in dem Zeitintervall gesendeten Rahmen erhöht wird.

4. Verfahren zur Aggregation und Steuerung von Nachrichten nach einem der vorstehenden Ansprüche, **dadurch gekennzeichnet, dass** der Nutzdatendurchsatz einer Transportrichtung durch die Rahmen in der Transportrichtung sendende Sende-/Empfangsvorrichtung berechnet, wobei die Berechnung des Durchsatzes in Abhängigkeit von der Anzahl der pro gleitender Sekunde übertragenen Rahmen erfolgt.

5. Verfahren zur Aggregation und Steuerung von Nachrichten nach einem der vorstehenden Ansprüche, **dadurch gekennzeichnet, dass** jede Transportrichtung einen vom maximalen Durchsatz des bidirektionalen Kanals abhängigen vordefinierten maximalen Durchsatz aufweist, wobei die Summe der maximalen Transportdurchsätze jeder Richtung kleiner oder gleich des maximalen Durchsatzes des bidirektionalen Kanals ist.

6. Verfahren zur Aggregation und Steuerung von Nachrichten nach dem vorstehenden Anspruch, **dadurch gekennzeichnet, dass,** wenn im Schritt des Sendens der Nutzdatendurchsatz einer Transportrichtung den maximalen Durchsatz dieser Transportrichtung erreicht, solange kein Rahmen gesendet wird, bis der Nutzdatendurchsatz der Transportrichtung gleich dem maximalen Durchsatz der Transportrichtung ist.

7. Verfahren zur Aggregation und Steuerung von Nachrichten nach einem der vorstehenden Ansprüche, **dadurch gekennzeichnet, dass** es nach dem Schritt des Empfangens von Nachrichten einen Schritt des Identifizierens jeder empfangenen Nachricht umfasst, wobei der Schritt des Identifizierens jeder empfangenen Nachricht das Zuweisen einer Priorität an jede der empfangenen Nachrichten in Abhängigkeit von mindestens einer in der Nachricht identifizierten Information umfasst.

8. Verfahren zur Aggregation und Steuerung von Nachrichten nach dem vorstehenden Anspruch, **dadurch gekennzeichnet, dass** es sich bei den identifizierten Informationen um den Nachrichtentyp handelt.

9. Verfahren zur Aggregation und Steuerung von Nachrichten nach einem der vorstehenden Ansprüche, **dadurch gekennzeichnet, dass** die Anzahl der von jeder Sende-/Empfangsvorrichtung für jedes Knotenpaar definierten Warteschlangen größer als zwei ist, und dass die Prioritätsstufe jeder Warteschlange über der zweiten Warteschlange hinaus niedriger als die Prioritätsstufe der vorherigen Warteschlange ist.

10. Verfahren zur Aggregation und Steuerung von Nachrichten nach einem der vorstehenden Ansprüche, **dadurch gekennzeichnet, dass** die Rahmen eine vordefinierte, der Nutzlastgröße einer Übertragungseinheit der verwendeten Transportschicht entsprechende Größe aufweisen.

11. Verfahren zur Aggregation und Steuerung von Nachrichten nach einem der vorstehenden Ansprüche, **dadurch gekennzeichnet, dass** die Pakete eine vordefinierte Größe derart aufweisen, dass das Verhältnis der Gesamtzahl der Prüfbytes zur Gesamtzahl der Nutzdatenbytes eines Rahmens weniger als 10 % beträgt.

12. Verfahren zur Aggregation und Steuerung von Nachrichten nach einem der vorstehenden Ansprüche, **dadurch gekennzeichnet, dass** das Zeitintervall des Sendens einer Anzahl von Rahmen für jede Transportrichtung in dem bidirektionalen Kanal gleich ist.

13. Verfahren zur Aggregation und Steuerung von Nachrichten nach einem der vorstehenden Ansprüche, **dadurch gekennzeichnet, dass** das Zeitintervall des Sendens einer Anzahl von Rahmen in Abhängigkeit vom maximalen Durchsatz des bidirektionalen Kanals und der vordefinierten Größe eines Rahmens vordefiniert ist.

14. Verfahren zur Aggregation und Steuerung von Nachrichten nach dem vorstehenden Anspruch, **dadurch gekennzeichnet, dass** das Zeitintervall des Sendens einer Anzahl von Rahmen in Abhängigkeit von der Leistung eines Netzwerkhosts aus einer vordefinierten Liste von Zeitintervallen ausgewählt wird, wobei das Zeitintervall aus der vordefinierten Liste von Zeitintervallen als das Zeitintervall ausgewählt wird, das direkt unter dem Ergebnis der Division der Größe eines Rahmens durch den maximalen Durchsatz des bidirektionalen Kanals liegt.

15. Kommunikationssystem, umfassend zwei Sende-/Empfangsvorrichtungen, die über einen einen maximalen Durchsatz aufweisenden bidirektionalen Kanal kommunizieren, wobei der bidirektionale Kanal den Transport von Daten in einer ersten Richtung und in einer der ersten Richtung entgegengesetzten zweiten Richtung ermöglicht, wobei jede Sende-/Empfangsvorrichtung konfiguriert ist, um die Schritte des Verfahrens nach einem der vorstehenden Ansprüche zu implementieren.

16. Kommunikationssystem nach dem vorstehenden Anspruch, wobei das System **dadurch gekennzeichnet ist, dass** jede Sende-/Empfangsvorrichtung umfasst:
- eine Sende-/Empfangsschnittstelle, die konfiguriert ist, um den Schritt des Empfangens einer Vielzahl von Nachrichten, die von einem Knoten der Vielzahl von Knoten stammen, zu implementieren,
- ein Datenverwaltungsmodul, das konfiguriert ist, um die Schritte des Segmentierens von Nachrichten, des Zuweisens von Paketen zu einer Warteschlange, des Erstellens von Rahmen und des Einfügens von Paketen aus den Warteschlangen in die Rahmen zu implementieren,
- ein Steuerungsmodul, das konfiguriert ist, um den Schritt des Sendens von Rahmen über den bidirektionalen Kanal zu implementieren.

## Claims

1. A method for aggregating and regulating messages in at least one network comprising:
- a plurality of nodes distributed in pairs of nodes and
- at least two transmitting/receiving devices, the two transmitting/receiving devices communicating via a bidirectional channel having a defined maximum throughput, the bidirectional channel enabling the transport of data in a first direction and in a second direction opposite to the first direction, each direction having a useful throughput, each transmitting/receiving device defining queues, each pair of nodes of the plurality of pairs of nodes having a plurality of queues allocated, each plurality of queues allocated to a pair of nodes comprising at least a first and a second queue, the first queue having a high priority, the second queue having a lower priority than the first queue,
the method being implemented by each of the two transmitting/receiving devices, the method comprising the steps of:
- receiving a plurality of messages, the messages of the plurality of messages coming from nodes of the plurality of nodes and being sent to other nodes of the plurality of nodes, the destination node of each message belonging to the same pair of nodes as the node from which the message originates,
- segmentation of each message into packets of a predefined size,
- allocation of each packet resulting from the segmentation to a queue depending on the origin, the destination and a priority of the message,
- creation of a first frame and, if necessary, at least a second frame, the frames having a predefined size, and insertion of packets of queues into at least the first frame and, if necessary, in the at least one second frame, the insertion of packets allocated to the highest priority queue being performed before the insertion of packets allocated to the lowest priority queue, the insertion being performed initially in the first frame then, if necessary, in the at least one second next frame,
- sending, via the bidirectional channel over a predefined time interval, of the first frame then, if necessary, of the at least one second frame, the frames being sent successively, the number of frames sent over the time interval being dependent on the maximum throughput of the bidirectional channel and on the useful throughput in each of the transport directions of the bidirectional channel.

2. A method for aggregating and regulating messages according to the preceding claim **characterized in that** the messages have a maximum predefined size by priority, and **in that** in the step for allocating packets to a queue based upon the priority, if the size of the message to which the packets belong exceeds the maximum size for the priority, the packets of the message are allocated to the priority queue directly below the priority queue to which they have been allocated.

3. A method for aggregating and regulating messages according to any one of the preceding claims **characterized in that** in the step for sending frames via the bidirectional channel, the number of frames sent over the time interval is increased if the sum of the useful throughputs of the two transport directions of the bidirectional channel is less than the maximum throughput of the bidirectional channel.

4. A method for aggregating and regulating messages according to any one of the preceding claims **characterized in that** the useful throughput of a transport direction is calculated by the transmitting/receiving device sending frames in the transport direction, the throughput being calculated based on the number of frames transmitted per sliding second.

5. A method for aggregating and regulating messages according to any one of the preceding claims **characterized in that** each transport direction has a maximum predefined throughput based on the maximum throughput of the bidirectional channel, the sum of the maximum transporting throughputs of each direction being less than or equal to the maximum throughput of the bidirectional channel.

6. A method for aggregating and regulating messages according to the preceding claim **characterized in that** in the sending step, if the useful throughput of a transport direction reaches the maximum throughput of said transport direction, no frame is sent while the useful throughput of the transport direction is equal to the maximum throughput of the transport direction.

7. A method for aggregating and regulating messages according to any of the preceding claims **characterized in that** it comprises, after the message receiving step, a step for identifying each message received, the step for identifying each message received comprising the allocation of a priority to each message received based on at least one piece of information identified in the message.

8. A method for aggregating and regulating messages according to the preceding claim **characterized in that** the information identified is the type of message.

9. A method for aggregating and regulating messages according to any one of the preceding claims **characterized in that** the number of queues defined by each transmitting/receiving device for each pair of nodes is greater than two, and **in that** the priority level of each queue after the second queue is less than the priority level of the previous queue.

10. A method for aggregating and regulating messages according to any one of the preceding claims **characterized in that** the frames have a predefined size equal to the size of the payload of a transmission unit for the transport layer used.

11. A method for aggregating and regulating messages according to any one of the preceding claims **characterized in that** the packets have a predefined size such that the ratio between the total number of control bytes and the total number of bytes of the payload of a frame is less than 10%.

12. A method for aggregating and regulating messages according to any one of the preceding claims **characterized in that** the time interval for sending a number of frames is identical for each transport direction in the bidirectional channel.

13. A method of aggregating and regulating messages according to any one of the preceding claims **characterized in that** the time interval
for sending a number of frames is predefined based on the maximum throughput of the bidirectional channel and on the predefined size of a frame.

14. A method for aggregating and regulating messages according to the preceding claim **characterized in that** the time interval for sending a number of frames is selected from a list of predefined time intervals based on the performance of a network host, the time interval being selected in the predefined list of time intervals as being the time interval directly less than the result of dividing the size of a frame by the maximum throughput of the bidirectional channel.

15. A communication system comprising two transmitting/receiving devices communicating via a bidirectional channel having a maximum throughput, the bidirectional channel facilitating the transport of data in a first direction and in a second direction opposite to the first direction, each transmitting/receiving device being configured to implement the steps of the method according to any one of the preceding claims.

16. A communication system according to the preceding claim, the system being **characterized in that** each transmitting/receiving device comprises:
- a transmitting/receiving interface, configured to implement the step for receiving a plurality of messages from a node of the plurality of nodes,
- a data management module configured to implement the steps for segmenting messages, for allocating packets to a queue, for creating frames and for inserting packets of queues in the frames,
- a regulation module configured to implement the step for sending frames through the bidirectional channel.
